# EUROPEAN PATENT SPECIFICATION

(11) **EP 3 421 640 B1**
(45) Date of publication and mention of the grant of the patent: **19.04.2023**
(21) Application number: 17774116.2
(22) Date of filing: 07.03.2017
(51) Int. Cl.: B32B 7/12, B29K 705/00, B32B 15/088, B32B 15/20, B32B 27/18, C23C 28/00, B32B 27/40, B29C 45/14

(54) **CONVERSION-COATED METAL PLATE, SURFACE-TREATED METAL PLATE, COMPOSITE MEMBER, AND METHOD FOR PRODUCING CONVERSION-COATED METAL PLATE**
KONVERSIONSBESCHICHTETE METALLPLATTE, OBERFLÄCHENBEHANDELTE METALLPLATTE, VERBUNDELEMENT SOWIE VERFAHREN ZUR HERSTELLUNG EINER KONVERSIONSBESCHICHTETEN METALLPLATTE
PLAQUE MÉTALLIQUE AVEC TRAITEMENT CHIMIQUE DE CONVERSION AINSI QUE PROCÉDÉ DE FABRICATION DE CELLE-CI, PLAQUE MÉTALLIQUE AVEC TRAITEMENT DE SURFACE, ET ÉLÉMENT COMPOSITE

(30) Priority: 31.03.2016 JP 2016069931
(43) Date of publication of application: 02.01.2019
(73) Proprietor: Kabushiki Kaisha Kobe Seiko Sho (Kobe Steel, Ltd.), Kobe-shi, Hyogo 651-8585 (JP)
(72) Inventor: HIRANO, Yasuo, Hyogo 675-0137 (JP); WATASE, Takeshi, Hyogo 675-0137 (JP); YAMAMOTO, Tetsuya, Hyogo 675-0137 (JP)
(74) Representative: Müller-Boré & Partner Patentanwälte PartG mbB
(86) International application number: PCT/JP2017/009025
(87) International publication number: WO 2017/169571

(56) References cited:
- EP-A1- 2 623 636
- WO-A1-2015/064689
- JP-A- H0 971 873
- JP-A- H1 088 364
- JP-A- 2002 279 752
- JP-A- 2003 251 743
- JP-A- 2010 520 808
- US-A1- 2004 062 873
- US-A1- 2013 177 768
- US-A1- 2015 361 274
- KEUN TAIK LEE ET AL: "Plasma modification of polyolefin surfaces", PACKAGING TECHNOLOGY AND SCIENCE, JOHN WILEY & SONS LTD, UK, vol. 22, no. 3, 1 April 2009 (2009-04-01), pages 139-150, XP002719583, ISSN: 0894-3214, DOI: 10.1002/PTS.829 [retrieved on 2008-10-03]

## Description

### Technical Field

The present invention relates to a chemical conversion coated metal sheet, a surface-treated metal sheet, a composite member, and a method for producing the chemical conversion coated metal sheet. More particularly, the present invention relates to a chemical conversion coated metal sheet that is excellent in press-formability and that is useful as a material to be formed into a composite member excellent in adhesiveness. Also, the present invention relates to the chemical conversion coated metal sheet, a surface-treated metal sheet provided with the chemical conversion coated metal sheet, a composite member provided with the surface-treated metal sheet, and a method for producing the chemical conversion coated metal sheet.

### Background Art

Many metal components including metal sheets are used in automobiles, domestic appliances, OA (office automation) equipment, and the like. In many cases, such metal components are used by being obtained through press-molding of a metal sheet to provide a predetermined shape and thereafter being joined with another metal component or plastic component by means of welding, screwing, or the like.

Meanwhile, if a surface of a metal sheet can be provided with adhesiveness to a plastic, it is possible to form a metal sheet composite resin molded article (hereafter referred to as a composite member), in which a metal component and a resin molded article such as a plastic component are bonded to each other, simply by press-molding the metal sheet, thereafter setting the press-molded metal sheet in a plastic molding die, injecting a molten plastic, and solidifying the plastic by cooling, thereby leading to increased efficiency of the member production step and to weight reduction of the member. As a method for providing a surface of a metal sheet with adhesiveness to a plastic, the present applicant proposes by Patent Literature 1 a surface-treated metal sheet in which an adhesive layer is provided on a part or a whole of a chemical conversion coating film surface of a hot-dip galvannealed metal sheet subjected to a chemical conversion treatment, in which the chemical conversion coating film contains a water-soluble resin and a colloidal silica.

Also, it is demanded that a chemical conversion coated metal sheet, which is a metal sheet provided with a chemical conversion coating film such as described above, is excellent in press-formability in order to obtain a suitable composite member by providing an adhesive layer and a resin molded article on a surface thereof. As a method for improving the press-formability, it can be considered to add a polyethylene wax to the chemical conversion coating film, as disclosed in Patent Literature 2.

### Citation List

### Patent Literature

Patent Literature 1: Japanese Unexamined Patent Publication No. 2015-196878
Patent Literature 2: Japanese Unexamined Patent Publication No. 2001-271173 US 2004/062873 A1, US 2015/361274 A1, EP 2 623 636 A1, US 2013/177768 A1 disclose each a chemical conversion coated metal sheet comprising a metal substrate and a chemical conversion coating formed thereon, wherein the chemical conversion coating film contains a water-soluble resin and a lubricant having carbon-oxygen bonds such as oxidized polyethylene wax.
WO 2015/064689 A1 discloses a composite member comprising a chemical conversion coated metal sheet, an adhesive layer disposed thereon and a resin layer disposed on the adhesive layer.

### Summary of Invention

An object of the present invention is to provide a chemical conversion coated metal sheet that is excellent in press-formability and that is useful as a material to be formed into a composite member excellent in adhesiveness.

One aspect of the present invention is a chemical conversion coated metal sheet according to claim 1.

The foregoing and other objects, features, and advantages of the present invention will be apparent from the following detailed description.

### Description of Embodiments

The surface-treated metal sheet disclosed in Patent Literature 1 is excellent in corrosion resistance and is also excellent in adhesiveness to a hot-dip galvannealed steel sheet and a resin layer. On the other hand, when the press-formability of a chemical conversion coated metal sheet in such a surface-treated metal sheet is poor, there is a tendency such that it is difficult to press-mold the chemical conversion coated metal sheet and thereafter to provide an adhesive layer and a resin molded article to form a composite member. According to the studies made by the present inventors, it has been found out that, in a conventional chemical conversion coated metal sheet, a high kinetic friction coefficient can be a cause of making it difficult to press-mold the chemical conversion coated metal sheet into an intended shape. From these, a chemical conversion coated metal sheet more excellent in press-formability is demanded.

Also, according to the studies made by the present inventors, it has been found out that a method of adding a polyethylene wax to a chemical conversion coating film, which can be considered as a method for improving the press-formability, improves the press-formability indeed but decreases the adhesiveness between the surface-treated metal sheet and the resin molded article (which may hereafter be simply referred to as adhesiveness).

Thus, in view of the various circumstances described above, the present inventors have made various studies in order to obtain a chemical conversion coated metal sheet excellent in press-formability and adhesiveness, thereby arriving at the concept of the present invention described below.

Hereafter, embodiments according to the present invention will be described; however, the present invention is not limited to these.

In the chemical conversion coated metal sheet according to the present embodiment, a chemical conversion coating film having a predetermined thickness is laminated on a metal substrate, and the chemical conversion coating film contains a water-soluble resin and a predetermined lubricant.

### [Metal substrate]

The metal substrate is not particularly limited, and examples thereof include steel sheets such as a non-plated cold-rolled steel sheet, a hot-dip galvanized steel sheet (GI), a hot-dip galvannealed steel sheet (GA), and an electrogalvanized steel sheet (EG) as well as an aluminum sheet and a titanium sheet. Among these, a hot-dip galvanized steel sheet (GI), an electrogalvanized steel sheet (EG), an aluminum sheet, and a titanium sheet are preferable, and a hot-dip galvannealed steel sheet (GA) is more preferable. The thickness of the metal substrate is not particularly limited; however, the thickness is preferably about 0.3 to 3.2 mm in view of weight reduction of the final product.

### <Chemical conversion coating film>

The chemical conversion coating film can be fabricated by using a chemical conversion coating film-forming coating liquid. The chemical conversion coating film essentially contains a water-soluble resin. In other words, the chemical conversion coating film-forming coating liquid contains a water-soluble resin.

### [Water-soluble resin]

By using the water-soluble resin, the chemical conversion coating film can cover the surface of the metal substrate as a uniform continuous coating film, so that the chemical conversion coated metal sheet can exhibit a high corrosion resistance despite the fact that the metal substrate is only provided with the chemical conversion coating film. This seems to be because the water-soluble resin can be dissolved in water. In other words, this is because the surface of the metal substrate can be covered with the chemical conversion coating film as a uniform continuous coating film by applying the chemical conversion coating film-forming coating liquid in which the water-soluble resin is dissolved. Here, the water-soluble resin as referred to in the present specification refers to a resin that is dissolved at 1 mass% or more, more preferably at 5 mass% or more, in water of 25°C. Also, a resin that can be turned into a uniform transparent solution as viewed by eye inspection by adjusting the pH to be 5 to 9 with an alkali or the like is included within the scope of the water-soluble resins.

The water-soluble resin is preferably at least one of a water-soluble urethane resin and a water-soluble acrylic resin, and is more preferably a water-soluble urethane resin. As the water-soluble urethane resin, a water-soluble urethane resin of self-crosslinking type having a blocked isocyanate group is preferable. Examples of such a water-soluble urethane resin include "ELASTRON (registered trademark)" series manufactured by DKS Co., Ltd. and, among these, "ELASTRON (registered trademark) MF-25K" is particularly preferable.

Also, as described above, a water-soluble acrylic resin may be used as the water-soluble resin. Examples of such a water-soluble acrylic resin include "AQUPEC (registered trademark)" series manufactured by Sumitomo Seika Chemicals Co., Ltd. and, among these, "AQUPEC (registered trademark) HV-501" is particularly preferable.

The amount of the water-soluble resin is preferably 5 parts by mass or more, more preferably 10 parts by mass or more, still more preferably 20 parts by mass or more, and particularly preferably 30 parts by mass or more, relative to 100 parts by mass of the resin in the chemical conversion coating film-forming coating liquid. An upper limit is not particularly limited; however, the amount may be, for example, 80 parts by mass or less, preferably 70 parts by mass or less, and more preferably 60 parts by mass or less.

The amount of the water-soluble resin is preferably 5 parts by mass or more, more preferably 10 parts by mass or more, and still more preferably 20 parts by mass or more, relative to 100 parts by mass of the solid components of the chemical conversion coating film-forming coating liquid. Also, the amount of the water-soluble resin is preferably 50 parts by mass or less, more preferably 40 parts by mass or less, and still more preferably 30 parts by mass or less, relative to 100 parts by mass of the solid components of the chemical conversion coating film-forming coating liquid.

Further, the content of the water-soluble resin is preferably 5 mass% or more, more preferably 10 mass% or more, and still more preferably 20 mass% or more, relative to the chemical conversion coating film. Also, the content of the water-soluble resin is preferably 50 mass% or less, more preferably 40 mass% or less, and still more preferably 30 mass% or less, relative to the chemical conversion coating film.

When the amount of the water-soluble resin is too small, the corrosion resistance tends to decrease. Also, when the amount of the water-soluble resin is too large, the water resistance tends to decrease.

### [Water-based resin]

The chemical conversion coating film may further contain a water-based resin other than the aforementioned water-soluble resin. Incorporation of the water-based resin improves the water resistance.

The water-based resin is preferably a water-based urethane resin in view of performance, and a water dispersion (emulsion) of a urethane resin is suitable because of facility in mixing with the aforementioned water-soluble resin. Examples of the water dispersion of a urethane resin include "SUPERFLEX (registered trademark)" series manufactured by DKS Co., Ltd. and, among these, "SUPERFLEX (registered trademark) 170" is a preferable example. The water dispersion of a urethane resin is preferably used by being combined with a water-soluble urethane resin.

Further, examples of the water-based resin also include "JURYMER (registered trademark)" series manufactured by Toagosei Co., Ltd., which are water-based acrylic resins.

The amount of the water-based resin is preferably 95 parts by mass or less, more preferably 90 parts by mass or less, still more preferably 80 parts by mass or less, and particularly preferably 70 parts by mass or less, relative to 100 parts by mass of the resin in the chemical conversion coating film-forming coating liquid. A lower limit is not particularly limited; however, the amount may be, for example, 20 parts by mass or more, preferably 30 parts by mass or more, and more preferably 40 parts by mass or more.

The amount of the water-based resin is preferably 5 parts by mass or more, more preferably 10 parts by mass or more, and still more preferably 20 parts by mass or more, relative to 100 parts by mass of the solid components of the chemical conversion coating film-forming coating liquid. Also, the amount of the water-based resin is preferably 50 parts by mass or less, more preferably 40 parts by mass or less, and still more preferably 30 parts by mass or less, relative to 100 parts by mass of the solid components of the chemical conversion coating film-forming coating liquid.

Further, the content of the water-based resin is preferably 5 mass% or more, more preferably 10 mass% or more, and still more preferably 20 mass% or more, relative to the chemical conversion coating film. Also, the content of the water-based resin is preferably 50 mass% or less, more preferably 40 mass% or less, and still more preferably 30 mass% or less, relative to the chemical conversion coating film.

When the amount of the water-based resin is too small, the water resistance tends to decrease. Also, when the amount of the water-based resin is too large, the corrosion resistance tends to decrease.

### [Lubricant]

As described above, the chemical conversion coating film contains a predetermined lubricant. The lubricant is a lubricant which has carbon-oxygen bonds and in which the ratio includes 5 atom% or more and 20 atom% or less of carbon atoms configuring the carbon-oxgen bonds relative to a total of carbon atoms contained in the lubricant. Such a lubricant having carbon-oxygen bonds is a lubricant having carbon-oxygen bonds obtained by performing a plasma treatment on a lubricant containing carbon atoms, the plasma treatment being a method of generating an oxygen plasma by performing electric discharge in an atmosphere made of a mixture gas of argon and oxygen or made of oxygen alone, and treating the lubricant containing carbon atoms with the generated oxygen plasma.

The lubricant containing carbon atoms is not particularly limited, and examples that can be used include polyolefin waxes such as polyethylene, oxidized polyethylene, and polypropylene; and paraffin waxes. Among these, a polyolefin wax is preferable; a polyolefin wax made of a polymer or a copolymer of α-olefin having a carbon number of 2 to 20 is more preferable; and a polyethylene wax is still more preferable. A principal usage of the chemical conversion coated metal sheet lies in bonding with a polyolefin resin via an acid-modified polyolefin adhesive. By using a polyolefin wax, adhesion to the acid-modified polyolefin adhesive can be expected.

The amount of the lubricant is preferably 0.5 part by mass or more, more preferably 1 part by mass or more, and still more preferably 1.5 parts by mass or more, relative to 100 parts by mass of the solid components of the chemical conversion coating film-forming coating liquid. Also, the amount of the lubricant is preferably 10 parts by mass or less, more preferably 5 parts by mass or less, and still more preferably 3 parts by mass or less, relative to 100 parts by mass of the solid components of the chemical conversion coating film-forming coating liquid.

Further, the content of the lubricant is preferably 0.5 mass% or more, more preferably 1 mass% or more, and still more preferably 1.5 mass% or more, relative to the chemical conversion coating film. Also, the content of the lubricant is preferably 10 mass% or less, more preferably 5 mass% or less, and still more preferably 3 mass% or less, relative to the chemical conversion coating film.

When the amount of the lubricant is too small, the lubricity and the processability realized by this tend to decrease. Also, when the amount of the lubricant is too large, the adhesion to the adhesive tends to decrease.

A commercially available product can also be used as the polyethylene wax, and examples thereof include high-density polyethylene waxes such as Hi-WAX (registered trademark) 800P, 400P, 200P, and 100P manufactured by Mitsui Chemicals, Inc.; and low-density polyethylene waxes such as Hi-WAX (registered trademark) 720P, 420P, and 320P manufactured by Mitsui Chemicals, Inc. The polyethylene wax is preferably a high-density polyethylene wax. A high-density polyethylene wax having a high density and a high crystallinity has a low hardness and a high melting point and softening point, so that the press-formability can be further enhanced. Here, the "high-density polyethylene" refers to a polyethylene in which the density measured in accordance with JIS K 7112(1999) is 960 kg/m³ or more, and is preferably a polyethylene having a density of 970 kg/m³ or more.

As described above, the lubricant is a lubricant having carbon-oxygen bonds. Further, the ratio of carbon atoms configuring the carbon-oxgen bonds relative to a total of carbon atoms contained in the lubricant is 5 atom% or more and 20 atom% or less. Also, the lubricant having carbon-oxygen bonds is formed by performing an oxygen plasma treatment on a lubricant containing carbon atoms. A composite member excellent in adhesiveness can be obtained by forming a chemical conversion coated metal sheet provided with a chemical conversion coating film that contains such a lubricant having carbon-oxygen bonds. Also, the ratio is preferably 10 atom% or less. When the ratio is too low, the adhesion to the adhesive tends to decrease. Also, when the ratio is too high, the lubricity tends to decrease. Here, a method of measuring the ratio (carbon atoms configuring the carbon-oxygen bonds / carbon atoms contained in the lubricant) will be described later.

The aforementioned plasma treatment is a method of treating the lubricant containing carbon atoms by a publicly known plasma treatment method. Specifically, the plasma treatment is a method of generating an oxygen plasma by performing electric discharge in an atmosphere made of a mixture gas of argon and oxygen or made of oxygen alone, and treating the lubricant containing carbon atoms with the generated oxygen plasma. As a processing time of the plasma treatment, the lubricant can be treated in about 30 seconds to 5 minutes, though the time depends on the electric discharge power.

### [Colloidal silica]

The chemical conversion coating film preferably contains a colloidal silica. This is because incorporation of a colloidal silica produces an effect of enhancing the corrosion resistance. As the colloidal silica, "XS", "SS", "40", "N", "UP", and others of "SNOWTEX (registered trademark)" series (colloidal silica manufactured by Nissan Chemical Industries, Ltd.) are suitably used. In particular, "SNOWTEX (registered trademark) 40" having a surface area average particle size of about 10 to 20 nm is suitably used.

The amount of the colloidal silica is preferably 30 to 60 parts by mass, more preferably 35 to 55 parts by mass, and still more preferably 40 to 50 parts by mass, relative to 100 parts by mass of the solid components of the chemical conversion coating film-forming coating liquid. The content of the colloidal silica is preferably 30 to 60 mass%, more preferably 35 to 55 mass%, and still more preferably 40 to 50 mass%, relative to the chemical conversion coating film.

### [Silane coupling agent]

It is preferable to blend a silane coupling agent into the chemical conversion coating film-forming coating liquid. Incorporation of a silane coupling agent can improve the adhesion of the chemical conversion coating film to the metal substrate. Specific examples of the silane coupling agent include amino-group-containing silane coupling agents such as γ-aminopropyltrimethoxysilane, γ-aminopropyltriethoxysilane, N-(β-aminoethyl)-γ-aminopropyltrimethoxysilane, and N-(β-aminoethyl)-γ-aminopropylmethyldimethoxysilane; glycidoxy-group-containing silane coupling agents such as γ-glycidoxypropyltrimethoxysilane, γ-glycidoxypropylmethyldimethoxysilane, γ-glycidoxypropyltriethoxysilane, and γ-glycidoxymethyldimethoxysilane; vinyl-group-containing silane coupling agents such as vinyltrimethoxysilane, vinyl triethoxysilane, and vinyltris(β-methoxyethoxy)silane; methacryloxy-group-containing silane coupling agents such as γ-methacryloxypropyltrimethoxysilane; mercapto-group-containing silane coupling agents such as γ-mercaptopropyltrimethoxysilane and γ-mercaptopropylmethyldimethoxysilane; and halogen-group-containing silane coupling agents such as γ-chloropropylmethoxysilane and γ-chloropropyltrimethoxysilane. Among these, the silane coupling agent is preferably an amino-group-containing silane coupling agent. These silane coupling agents may be used either alone or in combination of two or more kinds. Among these, an amino-group-containing silane coupling agent and a glycidoxy-group-containing silane coupling agent are preferable, and an amino-group-containing silane coupling agent is more preferable, from the viewpoint of providing a good bonding strength between the surface-treated metal sheet and the resin layer in the later-mentioned composite member obtained as a final product.

The amount of the silane coupling agent is preferably 1 to 20 parts by mass, more preferably 3 to 15 parts by mass, and still more preferably 5 to 10 parts by mass, relative to 100 parts by mass of the solid components of the chemical conversion coating film-forming coating liquid.

As the silane coupling agent, a commercially available product can be used as well. Examples of suitably usable silane coupling agents include KBM-903 (3-aminopropyltrimethoxysilane) manufactured by Shin-Etsu Silicone Co., Ltd., Z-6011 (3-aminopropyltriethoxysilane) manufactured by Dow Coming Toray Co., Ltd., and Z-6020 (3-(2-aminoethyl)aminopropyltrimethoxysilane) manufactured by Dow Corning Toray Co., Ltd.

### <Method of forming chemical conversion coating film>

At the time of forming the chemical conversion coating film, other publicly known additives may be added into the chemical conversion coating film-forming coating liquid. A method of forming the chemical conversion coating film on the metal substrate is not particularly limited, and conventional publicly known application methods can be adopted. For example, the chemical conversion coating film-forming coating liquid may be applied onto one surface or both surfaces of a metal substrate with use of the roll coater method, the spray method, the curtain flow coater method, or the like, followed by heating and drying. The heating and drying temperature is not particularly limited; however, since the coating liquid for forming the chemical conversion coating film is water-based, it is desirable to carry out heating for several ten seconds to several minutes at a temperature of around 100°C, at which water evaporates.

The chemical conversion coated metal sheet is a chemical conversion coated metal sheet that is excellent in press-formability and that is useful as a material to be formed into a composite member excellent in adhesiveness.

The thickness of the chemical conversion coating film is 0.2 µm or more (preferably 0.25 µm or more, more preferably 0.4 µm or more) and is 1.0 µm or less (preferably 0.8 µm or less, more preferably 0.7 µm or less), in terms of dry film thickness. When the thickness of the chemical conversion coating film is less than 0.2 µm, there is a fear that the corrosion resistance may become insufficient, or the kinetic friction coefficient may increase to degrade the press-formability. On the other hand, when the thickness of the chemical conversion coating film exceeds 1.0 µm, there is a fear that the weldability may decrease. The chemical conversion coating film may be made of one layer alone or a lamination of a plurality of layers. When a plurality of the chemical conversion coating film layers are laminated, the aforementioned dry film thickness refers to the total film thickness of all the chemical conversion coating films.

The kinetic friction coefficient of the chemical conversion coated metal sheet is preferably 0.25 or less, more preferably 0.2 or less, and still more preferably 0.15 or less. When the kinetic friction coefficient exceeds 0.25, there is a fear that the press-formability may decrease. Here, a method of measuring the kinetic friction coefficient of the chemical conversion coated metal sheet surface will be described later.

### <Surface-treated metal sheet>

The chemical conversion coated metal sheet can be turned into a surface-treated metal sheet by disposing an adhesive layer on a surface of the chemical conversion coating film provided in the chemical conversion coated metal sheet. In other words, the surface-treated metal sheet includes the chemical conversion coated metal sheet and an adhesive layer disposed on a surface of the chemical conversion coating film in the chemical conversion coated metal sheet. The adhesive layer may be provided over the whole surface of the chemical conversion coating film or may be provided at necessary parts on the surface of the chemical conversion coating film. When the adhesive layer is provided on a part of the surface of the chemical conversion coating film, the adhesive layer may be provided, for example, in a shape of several lines or in a dotted shape. Because of being provided with the chemical conversion coated metal sheet, such a surface-treating metal sheet is a surface-treated metal sheet that is excellent in press-formability and that is useful as a material to be formed into a composite member excellent in adhesiveness.

The adhesive contained in the adhesive layer is preferably one having an excellent adhesiveness to a later-mentioned resin molded article that is combined with the surface-treated metal sheet. In the case of combining with, for example, nylon (that is, when the resin molded article combined with the surface-treated metal sheet is nylon), the adhesive is preferably an adhesive for nylon. In the case of combining with a polypropylene resin (that is, when the resin molded article combined with the surface-treated metal sheet is a polypropylene resin), the adhesive is preferably an adhesive for polypropylene. Specifically, hot-melt type adhesives such as a hot-melt type urethane adhesive, a hot-melt type nylon adhesive, a urethane-modified nylon adhesive, a urethane-modified olefin adhesive, an acid-modified polypropylene adhesive, a chlorinated polypropylene adhesive, and a polyester adhesive are suitable.

The hot-melt type adhesive can be applied in a powder state onto the chemical conversion coated metal sheet. Examples of the hot-melt type adhesive that can be used include hot-melt type nylon adhesive "VESTAMELT (registered trademark)" series manufactured by Daicel-Evonik Ltd. and acid-modified polypropylene adhesive "UNISTOLE (registered trademark)" series manufactured by Mitsui Chemicals, Inc. Also, a solution obtained by dissolving an adhesive into an organic solvent or a water dispersion obtained by dispersing an adhesive into water may be applied onto a chemical conversion coated metal sheet. After application of the adhesive, the resultant is heated for about 1 to 3 minutes at a temperature suitable for the type of the adhesive (for example, about 180 to 230°C).

The thickness of the adhesive layer is not particularly limited; however, the adhesive layer preferably has a thickness of about 5 to 40 µm, more preferably 10 to 30 µm, after drying. When the thickness of the adhesive layer is smaller than 5 µm, there is a fear that the adhesive strength to the resin molded article may decrease. When the thickness of the adhesive layer exceeds 40 µm, no particular improvement in the adhesive strength is recognized and, on the contrary, the costs disadvantageously increase.

### <Composite member>

The surface-treated metal sheet is used by being combined with a resin molded article (resin layer), whereby a composite member is obtained in which the resin layer is provided on the adhesive layer in the surface-treated metal sheet. In other words, the composite member includes the surface-treated metal sheet and the resin layer disposed on the adhesive layer in the surface-treated metal sheet. At this time, when processing is needed in the composite member, it is possible to use a surface-treated metal sheet in which the adhesive layer is provided after the chemical conversion coated metal sheet is press-molded into an intended shape, or one in which a surface-treated metal sheet having an adhesive layer provided on the chemical conversion coated metal sheet is press-molded into an intended shape. Further, the composite member is obtained by putting the surface-treated metal sheet into a mold of an injection molding machine, performing mold clamping, injecting a molten resin into the mold, and allowing the resin to be cooled and solidified. It goes without saying that the surface-treated metal sheet may be combined with the resin by the press-molding method; however, it is preferable to adopt the injection molding method in order to make use of the advantages of short time and high efficiency of the injection molding.

The conditions for the injection molding may be suitably changed in accordance with the type of the resin constituting the molded article. One example of the conditions for the case in which the resin for the molded article is nylon 6 may be such that the cylinder temperature is 240 to 250°C; the mold temperature is 70 to 80°C; the injection holding time is 5 to 8 seconds; and the cooling time is about 20 to 30 seconds. Also, one example of the conditions for the case in which the resin for the molded article is a polypropylene resin may be such that the cylinder temperature is 230 to 250°C; the mold temperature is 45 to 55°C; the injection holding time is 5 to 8 seconds; and the cooling time is about 20 to 30 seconds. When injection molding is carried out under these conditions, a composite member in which the resin layer and the surface-treated metal sheet are firmly bonded to each other is obtained.

As the resin layer, any of publicly known resins for molded articles can be used, so that the resin is not particularly limited; however, various types of nylon, a polypropylene resin, and others are preferable, and a polypropylene resin is more preferable. The polypropylene resin is often used because of having a small weight (low specific gravity), a high strength, and a low cost. In order to enhance the strength of the composite member, the resin layer may contain reinforcing fibers such as glass fibers or carbon fibers at about 5 to 60 mass%. Further, publicly known additives such as various kinds of pigments and dyes, flame retardants, antimicrobial agents, antioxidants, plasticizers, and lubricants may be added.

The composite member thus obtained is excellent in press-formability and adhesiveness because of being provided with the surface-treating coating film.

While the present specification discloses various modes of techniques as described above, principal techniques among these will be summarized as follows.

One aspect of the present invention is a chemical conversion coated metal sheet according to claim 1.

In the chemical conversion coated metal sheet, the lubricant is preferably a polyolefin wax.

In the chemical conversion coated metal sheet, the water-soluble resin is preferably at least one of a water-soluble urethane resin and a water-soluble acrylic resin.

In the chemical conversion coated metal sheet, the chemical conversion coating film preferably further contains a water-based resin other than the aforementioned water-soluble resin.

Also, another aspect of the present invention is a surface-treated metal sheet including a chemical conversion coated metal sheet described above and an adhesive layer disposed on a part or a whole of the surface of the chemical conversion coating film in the chemical conversion coated metal sheet.

Also, another aspect of the present invention is a composite member including the surface-treated metal sheet described above and a resin layer disposed on the adhesive layer in the surface-treated metal sheet.

In the composite member, the resin layer preferably contains a polypropylene resin.

Also, another aspect of the present invention is a method for producing the chemical conversion coated metal sheet described above, the method being characterized by including a step of forming the chemical conversion coating film through applying a chemical conversion coating film-forming coating liquid containing the water-soluble resin and the lubricant onto at least one surface of the metal substrate.

According to the present invention, a chemical conversion coated metal sheet that is excellent in press-formability and that is useful as a material to be formed into a composite member excellent in adhesiveness can be formed by using a chemical conversion coating film containing a lubricant having carbon-oxygen bonds. In other words, when a composite member is produced by using this chemical conversion coated metal sheet, a composite member excellent in adhesiveness can be obtained. Also, this composite member can be formed into a desired shape by processing the chemical conversion coated metal sheet. Accordingly, the chemical conversion coated metal sheet can be used in a box body or an interior/exterior component of an automobile or domestic appliance, an outer plate member of furniture made of steel, an architectural material, or the like.

Also, according to the present invention, there is provided a surface-treated metal sheet in which an adhesive layer is provided on a surface of the chemical conversion coated metal sheet. Further, with use of this surface-treated metal sheet, a composite member combined and integrated with a resin layer can be provided.

Further, according to the present invention, there is provided a composite member excellent in adhesiveness by combining with a resin layer using the surface-treated metal sheet. Therefore, the composite member is useful for various purposes of use such as automobile components, domestic appliances, architectural materials, and OA equipment.

### Examples

Hereafter, the present invention will be described in further detail by way of examples.

Also, unless specifically mentioned, "parts" denotes "parts by mass", and "%" denotes "mass%".

First, a method of measurement and evaluation used in the examples will be described below.

### (Corrosion resistance (salt water spray test))

A test piece was cut out from a chemical conversion coated metal sheet obtained by a later-mentioned production method. After the cut edge (edge surface) was sealed with a tape, a salt water spray test (SST) was carried out for 500 hours in accordance with JIS Z 2371(2015), so as to determine a white rust generation ratio. The results are shown in Table 1.

### (Press-formability (kinetic friction coefficient))

The kinetic friction coefficient of a chemical conversion coated metal sheet obtained by a later-mentioned production method was measured with use of a kinetic friction coefficient measurement apparatus (HEIDON (registered trademark) 14D manufactured by Shinto Scientific Co., Ltd.). Specifically, a sum of five points located at different measurement sites were subjected to measurement with respect to the same sample (chemical conversion coated metal sheet) under the following conditions, and an average value of a sum of three points excluding the maximum value and the minimum value was determined as the kinetic friction coefficient.
Sliding surface: 10 mmφ steel ball
Sliding speed: 100 mm/min
Sliding distance: 50 mm

### (Weldability)

The welding was carried out with use of a portable spot welding machine (UNI-PROD 10 DIGITAL DELUXE manufactured by Daido Kogyo Co., Ltd.). The materials of the electrodes were chromium copper alloy for both of the anode and the cathode, and a tip end of the electrodes has a curved surface of 4 mmφ. The welding was carried out by partially superposing a non-coated metal sheet and a chemical conversion coated metal sheet obtained by a later-mentioned production method onto each other. Specifically, the chemical conversion coated metal sheet was superposed so as to be in contact with a part of the surface of the non-coated metal sheet, and welding was carried out by applying a load of 30 to 50 kg onto one electrode and pressing the non-coated metal sheet into the chemical conversion coated metal sheet side. The welding current at the time of welding was set to be 3 kA, and the energization time was set to be 0.25 seconds. Here, onto the other electrode, a load of such a degree that the other electrode may not be separated from the chemical conversion coated metal sheet is applied. The evaluation results are shown in Table 1.

### (Adhesiveness (adhesive strength))

In a composite member obtained by a production method described later, the end of the surface-treated metal sheet as viewed in the longitudinal direction and the end of the resin layer as viewed in the longitudinal direction were held with a chuck of a tensile tester in an atmosphere of 25°C and pulled at a tensile speed of 10 mm/min. The tensile strength at which the resin layer was peeled off from the surface-treated metal sheet was measured, and the obtained value was determined as the adhesive strength. Here, the end of the surface-treated metal sheet as viewed in the longitudinal direction is an end on the side that is not covered with the resin layer, and the end of the resin layer as viewed in the longitudinal direction is an end on the side to which the surface-treated metal sheet is not bonded.

### (Examples 1 to 3 and Comparative Examples 1 to 5)

### [Chemical conversion coated metal sheet]

A chemical conversion coating film-forming coating liquid was applied onto a surface of a hot-dip galvannealed steel sheet having a thickness of 1.0 mm with use of a bar coater so that the film thickness after drying would be the film thickness shown in Table 1, followed by heating at 100°C for one minute to obtain a chemical conversion coated metal sheet provided with the chemical conversion coating film. The composition of the chemical conversion coating film-forming coating liquid (the added amount is in terms of solid components) is shown in Table 1. As the water-soluble resin, ELASTRON (registered trademark) MF-25K manufactured by DKS Co., Ltd. was used. As the water-based resin, SUPERFLEX (registered trademark) 170 manufactured by DKS Co., Ltd. was used. As the colloidal silica, SNOWTEX (registered trademark) 40 (having a surface area average particle size of 10 to 20 nm) manufactured by Nissan Chemical Industries, Ltd. was used. As the silane coupling agent, KBM903 (y-aminopropyltrimethoxysilane) manufactured by Shin-Etsu Chemical Co., Ltd. was used. In Examples 1 to 3 and Comparative Examples 1, 2, and 5, a polyethylene wax (Hi-WAX (registered trademark) 800P800PF manufactured by Mitsui Chemicals, Inc.) subjected to a later-mentioned plasma treatment was used as the lubricant. In Comparative Example 4, a polyethylene wax (Hi-WAX (registered trademark) 800PF manufactured by Mitsui Chemicals, Inc.) that had not been subjected to a plasma treatment was used as the lubricant. Here, in Comparative Example 3, the chemical conversion coating film-forming coating liquid does not contain a lubricant. In Comparative Example 5, the chemical conversion coating film-forming coating liquid does not contain a water-soluble resin.

### <Plasma treatment of lubricant>

The plasma treatment of the lubricant was carried out by using a reactive ion etching apparatus (DEM-451T manufactured by Anelva Corporation). An oxygen gas was introduced into the apparatus, and the pressure was set to be 13 Pa. With use of a high-frequency power source having an output of 200 W with 13.56 MHz, a glow discharge was generated, and a plasma treatment was carried out on the lubricant for 3 minutes. Subsequently, the lubricant subjected to the treatment was immersed into distilled water for one hour, followed by drying.

With use of a Fourier transform infrared spectrophotometer, the ratio of the carbon atoms configuring the carbon-oxygen bonds relative to the carbon atoms contained in the lubricant (ratio of carbon having a carbon-oxygen bond relative to the carbon in the lubricant) was measured from the absorption in a neighborhood of 1750 cm⁻¹ deriving from the carbon-oxygen bonds and the absorption in a neighborhood of 2950 cm⁻¹ deriving from the carbon-hydrogen bonds. In the lubricant subjected to the plasma treatment, the aforementioned ratio was 6 atom%. Here, the lubricant before being subjected to the plasma treatment did not have a carbon-oxygen bond. In other words, in the lubricant before being subjected to the plasma treatment, the aforementioned ratio was 0 atom%.

### [Surface-treated metal sheet and composite member]

UNISTOLE (registered trademark) R-300 manufactured by Mitsui Chemicals, Inc., which was an acid-modified polypropylene adhesive, was applied onto the chemical conversion coating film of each of the chemical conversion coated metal sheets with use of a bar coater so that the film thickness would be 20 µm, followed by heating at 220°C for two minutes to obtain a surface-treated metal sheet provided with an adhesive layer.

Next, injection molding was carried out with use of an injection molding machine (PNX60 manufactured by Nissei Plastic Industrial Co., Ltd.). First, the above surface-treated metal sheet was cut to a size of 100 mm × 25 mm and put into a mold. Thereafter, Prime Polypro (registered trademark) V7000 manufactured by Prime Polymer Co., Ltd., which is a polypropylene resin containing 20 mass% of glass fibers, was melted and ejected so as to cover the surface of the adhesive layer, thereby to obtain a composite member provided with a resin layer having a size of 100 mm length × 25 mm width × 3 mm thickness. The resin layer and the surface-treated metal sheet were bonded so as to overlap with each other at 12.5 mm length × 25 mm width. The injection conditions are shown in Table 2.

**[Table 1]**

| | Configuration | | | | | | Physical properties | | | |
|---|---|---|---|---|---|---|---|---|---|---|
| | Chemical conversion coating film | | | | | | | | | |
| | Water-soluble resin | Lubricant | Water-based resin | Colloidal silica | Silane coupling agent | Film thickness (µm) | Salt water spray test | Kinetic friction coefficient | Weldability | Adhesive strength (MPa) |
| Example 1 | 24.25% | 1.5% | 24.25% | 45% | 5% | 0.8 | 5% or less | 0.15 | Weldable | 14.6 |
| Example 2 | 24.25% | 3% | 24.25% | | | 0.5 | 10% | 0.15 | Weldable | 14.7 |
| Example 3 | 24.25% | 3% | 24.25% | | | 0.25 | 20% | 0.2 | Weldable | 15.1 |
| Comparative Example 1 | 24.25% | 3% | 24.25% | | | 2 | 5% or less | 0.12 | Not weldable | 13.9 |
| Comparative Example 2 | 24.25% | 3% | 24.25% | | | 0.1 | 50% | 0.28 | Weldable | 15.2 |
| Comparative Example 3 | 25% | - | 25% | | | 0.8 | 5% or less | 0.34 | Weldable | 14.5 |
| Comparative Example 4 | 24.25% | 3% (not subjected to plasma treatment) | 24.25% | | | 0.8 | 10% | 0.14 | Weldable | 9.8 |
| Comparative Example 5 | **-** | 1.5% | 48.5% | | | 0.8 | 40% | 0.15 | Weldable | 14.7 |

**[Table 2**

| Molding machine | | Injection molding machine PNX60 manufactured by Nissei Plastic Industrial Co., Ltd. |
|---|---|---|
| Shape of molded article | | 100 × 25 × 3.0 mm (Insert side: 0.8 mmt) |
| Cylinder temperature (°C) | Nozzle | 240 |
| | Front part | 250 |
| | Central part | 250 |
| | Rear part | 240 |
| | Rearmost part | 230 |
| Mold temperature (°C) | | 45 to 55 |
| Injection pressure | Limit pressure (MPa) | 40 |
| | Holding pressure (MPa) | 50 |
| Filling speed (mm/s) | | 10 |
| Rotation speed of screw (rpm) | | 80 |
| Back pressure (MPa) | | 5 |
| I Settings | Injection pressure-holding time (s) | 6.5 |
| | Cooling time (s) | 25 |
| | Intermediate time (s) | 0.3 |
| | Metering finishing position (mm) | 30 |
| | V-P switching position (mm) | 7.5 |
| Actual measurement | Metering (s) | 7.38 |
| | Packing (s) | 2.47 |
| | 1 cycle (s) | - |

From Table 1, studies can be made as follows.

The chemical conversion coated metal sheets according to Examples 1 to 3 satisfying the constitutional requirements of the present invention were excellent in weldability, corrosion resistance, and press-formability. Further, the composite members produced by using the chemical conversion coated metal sheets according to Examples 1 to 3 were excellent in adhesive strength as well. Accordingly, the chemical conversion coated metal sheets according to Examples 1 to 3 were chemical conversion coated metal sheets excellent in press-formability and were chemical conversion coated metal sheets useful as a material to be formed into a composite member excellent in adhesiveness.

In contrast, the metal sheets other than those described above did not satisfy the constitutional requirements of the present invention, and hence desired characteristics could not be obtained, as will be described in detail in the following.

In the chemical conversion coated metal sheet according to Comparative Example 1 in which the film thickness was too large, the weldability was poor. On the other hand, in the chemical conversion coated metal sheet according to Comparative Example 2 in which the film thickness was too small, the corrosion resistance and the press-formability were poor.

In the chemical conversion coated metal sheet according to Comparative Example 3 that did not contain a lubricant, the press-formability was poor. On the other hand, regarding the chemical conversion coated metal sheet according to Comparative Example 4 containing a lubricant that had not been subjected to a plasma treatment, the adhesiveness of the composite member produced by using the chemical conversion coated metal sheet according to Comparative Example 4 was poor.

In the chemical conversion coated metal sheet according to Comparative Example 5 that did not contain a water-soluble resin, the corrosion resistance was poor.

This application is based on Japanese Patent Application No. 2016-069931 filed on March 31, 2016.

While the present invention has been fully and appropriately described in the above by way of embodiments in order to express the present invention, it is to be recognized that those skilled in the art can readily change and/or modify the embodiments described above. Therefore, it is to be interpreted that the changes or modifications made by those skilled in the art are encompassed within the scope of the claims unless those changes or modifications are at a level that departs from the scope of the claims described in the claims section of the present application.

### Industrial Applicability

According to the present invention, there is provided a chemical conversion coated metal sheet that is excellent in press-formability and that is useful as a material to be formed into a composite member excellent in adhesiveness. Also, a surface-treated metal sheet useful in combining with a resin molded article is provided by using the chemical conversion coated metal sheet. Further, a composite member excellent in adhesiveness is provided by using the surface-treated metal sheet, that is, by producing the composite member using the chemical conversion coated metal sheet.

## Claims

1. A chemical conversion coated metal sheet comprising a metal substrate and a chemical conversion coating film laminated on at least one surface of the metal substrate, wherein
the chemical conversion coating film contains a water-soluble resin, and a lubricant having carbon-oxygen bonds formed by performing a plasma treatment on a lubricant containing carbon atoms, the plasma treatment being a method of generating an oxygen plasma by performing electric discharge in an atmosphere made of a mixture gas of argon and oxygen or made of oxygen alone, and treating the lubricant containing carbon atoms with the generated oxygen plasma;
a thickness of the chemical conversion coating film is 0.2 to 1 µm; and
a ratio of carbon atoms configuring the carbon-oxygen bonds relative to a total of carbon atoms contained in the lubricant is 5 atom% or more and 20 atom% or less, the ratio being measured with use of a Fourier transform infrared spectrophotometer from the absorption in a neighborhood of 1750 cm⁻¹ deriving from the carbon-oxygen bonds and the absorption in a neighborhood of 2950 cm⁻¹ deriving from the carbon-hydrogen bonds.

2. The chemical conversion coated metal sheet according to claim 1, wherein the lubricant is a polyolefin wax.

3. The chemical conversion coated metal sheet according to claim 1, wherein the water-soluble resin is at least one of a water-soluble urethane resin and a water-soluble acrylic resin.

4. The chemical conversion coated metal sheet according to claim 1, wherein the chemical conversion coating film further contains a water-based resin other than the water-soluble resin.

5. A surface-treated metal sheet comprising a chemical conversion coated metal sheet according to any one of claims 1 to 4 and an adhesive layer disposed on a part or a whole of a surface of the chemical conversion coating film in the chemical conversion coated metal sheet.

6. A composite member comprising a surface-treated metal sheet according to claim 5 and a resin layer disposed on the adhesive layer in the surface-treated metal sheet.

7. The composite member according to claim 6, wherein the resin layer contains a polypropylene resin.

8. A method for producing a chemical conversion coated metal sheet according to any one of claims 1 to 4, the method comprising a step of forming the chemical conversion coating film through applying a chemical conversion coating film-forming coating liquid containing the water-soluble resin and the lubricant onto at least one surface of the metal substrate.

## Patentansprüche

1. Metallblech mit chemischer Umwandlungsbeschichtung, das ein Metallsubstrat und einen chemischen Umwandlungsbeschichtungsfilm umfasst, der auf mindestens einer Oberfläche des Metallsubstrats laminiert ist, wobei
der chemische Umwandlungsbeschichtungsfilm ein wasserlösliches Harz und ein Schmiermittel mit Kohlenstoff-Sauerstoff-Bindungen umfasst, die durch Durchführen einer Plasmabehandlung mit einem Schmiermittel gebildet worden sind, das Kohlenstoffatome enthält, wobei die Plasmabehandlung ein Verfahren des Erze u-gens eines Sauerstoffplasmas durch Durchführen einer elektrischen Entladung in einer Atmosphäre, die aus einem Mischgas aus Argon und Sauerstoff hergestellt ist oder aus Sauerstoff allein hergestellt ist, und des Behandelns des Schmiermittels, das Kohlenstoffatome enthält, mit dem erzeugten Sauerstoffplasma ist;
die Dicke des chemischen Umwandlungsbeschichtungsfilms 0,2 bis 1 µm beträgt; und
der Anteil von Kohlenstoffatomen, welche die Kohlenstoff-Sauerstoff-Bindungen bilden, bezogen auf die gesamten Kohlenstoffatome, die in dem Schmiermittel enthalten sind, 5 Atom-% oder mehr und 20 Atom-% oder weniger beträgt, wobei der Anteil mit einem Fouriertransform-Infrarotspektrophotometer aus der Absorption bei etwa 1750 cm⁻¹, die von den Kohlenstoff-Sauerstoff-Bindungen stammt, und der Absorption bei etwa 2950 cm⁻¹, die von den Kohlenstoff-Wasserstoff-Bindungen stammt, gemessen wird.

2. Metallblech mit chemischer Umwandlungsbeschichtung nach Anspruch 1, wobei das Schmiermittel ein Polyolefinwachs ist.

3. Metallblech mit chemischer Umwandlungsbeschichtung nach Anspruch 1, wobei das wasserlösliche Harz mindestens eines von einem wasserlöslichen Urethanharz und einem wasserlöslichen Acrylharz ist.

4. Metallblech mit chemischer Umwandlungsbeschichtung nach Anspruch 1, wobei der chemische Umwandlungsbeschichtungsfilm ferner ein Harz auf Wasserbasis enthält, das von dem wasserlöslichen Harz verschieden ist.

5. Oberflächenbehandeltes Metallblech, das ein Metallblech mit chemischer U m-wandlungsbeschichtung nach einem der Ansprüche 1 bis 4 und eine Haftmitte I-schicht umfasst, die auf einem Teil der Oberfläche oder der gesamten Oberfläche des chemischen Umwandlungsbeschichtungsfilms in dem Metallblech mit chem i-scher Umwandlungsbeschichtung angeordnet ist.

6. Verbundelement, das ein oberflächenbehandeltes Metallblech nach Anspruch 5 und eine Harzschicht umfasst, die auf der Haftmittelschicht in dem oberflächenb e-handelten Metallblech angeordnet ist.

7. Verbundelement nach Anspruch 6, wobei die Harzschicht ein Polypropylenharz enthält.

8. Verfahren zur Herstellung eines Metallblechs mit chemischer Umwandlungsbeschichtung nach einem der Ansprüche 1 bis 4, wobei das Verfahren einen Schritt des Bildens des chemischen Umwandlungsbeschichtungsfilms durch Aufbringen einer Beschichtungsflüssigkeit, die den chemischen Umwandlungsbeschichtungsfilm bildet und die das wasserlösliche Harz und das Schmiermittel enthält, auf mindestens eine Oberfläche des Metallsubstrats umfasst.

## Revendications

1. Tôle métallique revêtue par conversion chimique comprenant un substrat métallique et un film de revêtement par conversion chimique laminé sur au moins une surface du substrat métallique, dans laquelle
le film de revêtement par conversion chimique contient une résine soluble dans l'eau, et un lubrifiant présentant des liaisons carbone-oxygène formées par réalisation d'un traitement au plasma sur un lubrifiant contenant des atomes de carbone, le traitement au plasma étant un procédé de génération d'un plasma d'oxygène par réalisation d'une décharge électrique dans une atmosphère constituée d'un mélange gazeux d'argon et d'oxygène ou constitué d'oxygène seul, et traitement du lubrifiant contenant des atomes de carbone avec le plasma d'oxygène généré ;
l'épaisseur du film de revêtement par conversion chimique va de 0,2 à 1 µm ; et
le rapport des atomes de carbone configurant les liaisons carbone-oxygène sur base du total des atomes de carbone contenus dans le lubrifiant, est de 5% atomique ou plus et 20% atomique ou moins, le rapport étant mesuré à l'aide d'un spectrophotomètre à infrarouge à transformée de Fourier à partir de l'absorption avoisinant 1750 cm⁻¹ dérivant des liaisons carbone-oxygène et de l'absorption avoisinant 2950 cm⁻¹ dérivant des liaisons carbone-hydrogène.

2. Tôle métallique revêtue par conversion chimique selon la revendication 1, dans laquelle le lubrifiant est une cire de polyoléfine.

3. Tôle métallique revêtue par conversion chimique selon la revendication 1, dans laquelle la résine soluble dans l'eau est au moins l'une d'une résine uréthane soluble dans l'eau et d'une résine acrylique soluble dans l'eau.

4. Tôle métallique revêtue par conversion chimique selon la revendication 1, dans laquelle le film de revêtement par conversion chimique contient en outre une résine à base d'eau autre que la résine soluble dans l'eau.

5. Tôle métallique traitée en surface comprenant une tôle métallique revêtue par conversion chimique selon l'une quelconque des revendications 1 à 4, et une couche adhésive se trouvant sur une partie ou sur toute la surface du film de revêtement par conversion chimique dans la tôle métallique revêtue par conversion chimique.

6. Élément composite comprenant une tôle métallique traitée en surface selon la revendication 5 et une couche de résine se trouvant sur la couche adhésive dans la tôle métallique traitée en surface.

7. Élément composite selon la revendication 6, dans lequel la couche de résine contient une résine de polypropylène.

8. Procédé de production d'une tôle métallique revêtue par conversion chimique selon l'une quelconque des revendications 1 à 4, le procédé comprenant une étape de formation du film de revêtement par conversion chimique par l'application d'un liquide de revêtement par conversion chimique et formant un film contenant la résine soluble dans l'eau et le lubrifiant sur au moins une surface du substrat métallique.
